# EUROPEAN PATENT SPECIFICATION

(11) **EP 4 202 448 B1**
(45) Date of publication and mention of the grant of the patent: **03.12.2025**
(21) Application number: 21868551.9
(22) Date of filing: 10.09.2021
(51) Int. Cl.: G01Q 60/22

(54) **TERAHERTZ NEAR-FIELD IMAGING SYSTEM AND METHOD**
TERAHERTZ-NAHFELDBILDGEBUNGSSYSTEM UND -VERFAHREN
SYSTÈME ET PROCÉDÉ D'IMAGERIE EN CHAMP PROCHE TÉRAHERTZ

(30) Priority: 17.09.2020 CN 202010980153
(43) Date of publication of application: 28.06.2023
(73) Proprietor: University of Electronic Science and Technology of China, Chengdu, Sichuan 611731 (CN)
(72) Inventor: HU, Min, Chengdu, Sichuan 611731 (CN); WANG, Yueying, Chengdu, Sichuan 611731 (CN)
(74) Representative: Santarelli
(86) International application number: PCT/CN2021/117578
(87) International publication number: WO 2022/057726

(56) References cited:
- CN-A- 105 092 514
- CN-A- 107 860 742
- CN-A- 107 860 742
- CN-A- 108 844 914
- CN-A- 109 696 422
- CN-A- 112 083 196
- US-A- 5 894 125
- US-A1- 2019 064 210
- ELEZZABI A Y ET AL: "PHOTOCONDUCTIVE GENERATION AND DETECTION OF GUIDED-WAVE AND FREE-SPACE TERAHERTZ WAVEFORMS", IEICE TRANSACTIONS ON ELECTRONICS, INSTITUTE OF ELECTRONICS, TOKYO, JP, vol. E86-C, no. 7, 1 July 2003 (2003-07-01), pages 1218 - 1225, XP001172024, ISSN: 0916-8524

## Description

### Technical Field

The present invention relates to the field of terahertz imaging, and in particular, to a terahertz near-field imaging system and method.

### Background Art

Terahertz (THz) wave generally refers to electromagnetic wave with a frequency ranging from 100 GHz to 10 THz and a wavelength ranging from 30 to 3000 µm, which is between the millimeter wave and far infrared rays in the electromagnetic spectrum. It has optical properties of low radiation, good penetration, and being easy to resonate with biological and semiconductor materials, which characteristics allow terahertz near-field imaging technology to be widely applied in security inspection, identification of chemicals, medical imaging, quality control and other fields. In recent years, as technologies, such as signal sources and detection methods in the terahertz frequency band, are getting mature, near-field high-resolution imaging technology in the terahertz frequency band has also gradually developed.

In the prior art, a scanning near-field optical microscope for the terahertz frequency band is a scattering scanning near-field optical microscope, which mainly uses a solid-state microwave signal source, a gas laser device, a terahertz time-domain spectrometer as a signal source, in which case an incident wave is incident on a probe through a complex optical path module, near-field information of a surface of a sample is converted into scattered waves through the focusing and scattering of the probe, and the scattered waves are then collected and propagated to a detector through an optical element.

The conventional scattering scanning near-field optical microscope is unable to directly receive the near-field information of the surface of the sample, and usually propagates a near-field signal to the far field by means of the scattering effect of the probe. Therefore, an extremely complicated and sophisticated signal collection optical path system is required. For example, the terahertz pulse beam extraction mechanism of the terahertz near-field microscope provided in the patent CN111060719A involves propagating a near-field signal generated by a sample to the far field by using a complicated and sophisticated optical path system. The patent CN106442394B discloses a terahertz near-field imaging system, in which a near-field detector is replaced with a self-mixing effect, and a near-field terahertz signal reflected by a near-field probe shares a common optical path with an incident signal, thereby effectively simplifying the optical path system.

The patent CN107860742B discloses a reflective terahertz time-domain near-field scanning microscope device, featuring a femtosecond pulse laser, optical fiber components, terahertz transmitting and receiving module, delay line module, visible light components, and control computer.

The article "photoconductive generation and detection of guided-wave and free-space terahertz waveforms" published by Elezzabi A.Y. et al. in IEICE TRANSACTIONS on Electronics Vol.E86-C No.7, July 1st 2003, pp.1218-1225 disclosed several photoconductive (PC) geometrics for the generation of both guided-wave and free-space terahertz (THz) waveforms. It is found that guided-wave THz electrical waveforms can be produced through both PC self-switching and frozen wave generation-eliminating the need for an ultrashort carrier lifetime in the semiconductor substrate. The concept of PC switching is also applied to the generation of free-space THz waveforms, and various ZnSe detectors are investigated as potential electro-optic THz sensors.

The patent document US 2019/064210 A1 discloses an apparatus and a method for controlling a tunnel current flowing between a first conductive object and a second conductive object.

However, the inventors have found that there are still two core problems with such a signal extraction method of using an optical path system to propagate a near-field signal to the far field. The first one is that, generally, few of the signals collected in the far field contains near-field information, most of which is useless background scattered signals, resulting in an extremely low signal-to-noise ratio. The second one is that a highly precise optical path system is required and thus needs to be finely tuned by a nanoscale-resolution displacement stage, and therefore, a minor deviation may lead to a significant reduction in the signal strength and signal-to-noise ratio.

### Summary

An objective of the present invention is to provide a terahertz near-field imaging system, in which a metal probe of a scanning near-field optical microscope is used to couple a near-field signal generated on a surface of a sample into a current, and deliver, via a transmission line, the current to a back end processor for processing, to obtain near-field information of the surface of the sample, such that direct extraction of the near-field signal from the surface of the sample by the metal probe is implemented, which eliminates the need for a sophisticated and complicated optical path system for extracting and propagating the near-field signal, significantly reduces the manufacturing cost, and simplifies the construction of the scanning near-field optical microscope. In addition, the metal probe can directly extract a high-quality near-field signal from the surface of the sample, which prevents the mix-in of a far-field signal during transmission in an optical path system, thereby significantly improving the extraction efficiency of the near-field signal, increasing the signal-to-noise ratio of the signal, and reducing the difficulty in subsequent signal processing.

According to claim 1, the above objective is achieved by the following technical solution:
a laser device for generating a femtosecond laser, where the femtosecond laser is divided into incident light and detection light by means of a beam splitter, the incident light is transmitted to an incidence unit, and the detection light is transmitted to a delay unit, is delayed, and is then transmitted to a photoconductive switch and triggers the photoconductive switch to be switched on;
the incidence unit for generating an incident signal under the excitation of the incident light, where the incident signal is configured to excite a metal probe to generate a local field, and the local field is configured to excite a sample in a detection direction of the metal probe to generate a near-field signal;
the metal probe for coupling the near-field signal into a current signal on a surface of the metal probe, where the current signal is transmitted to a back end processing unit via the metal probe, a transmission line and the photoconductive switch; and
the back end processing unit for receiving and processing the current signal to obtain near-field information of a surface of the sample.

In this technical solution, the femtosecond laser generated by the laser device is divided into incident light and detection light by means of a beam splitter. The incident light is transmitted to the incidence unit, and the detection light is transmitted to the delay unit.

In one or more embodiments, after the incidence unit converts the incident light into the incident signal, the incident signal is focused on the metal probe of a scanning near-field optical microscope through a parabolic mirror, and a local field is generated at the tip of the metal probe, where the local field is a highly localized electromagnetic field, and under the excitation of the local field, the sample below the metal probe generates the near-field signal. In one or more embodiments, the incident signal is fed into the metal probe in the form of the current via the transmission line, and the local field is generated at the tip of the metal probe to excite the sample below the metal probe, so as to generate the near-field signal.

The metal probe is structurally conical, and the tip thereof may achieve nanoscale resolution. The metal probe is connected, at a bottom end, to the photoconductive switch via the transmission line. As with a single-wire waveguide, the metal probe can conduct electromagnetic waves and currents with a conduction efficiency much higher than a scattering efficiency thereof. With this characteristic of the metal probe, the metal probe is used to extract the near-field signal directly from the surface of the sample. Specifically, the near-field signal on the surface of the sample is coupled into the current signal by the metal probe, and the current signal is a current signal on a surface of the metal probe. The current signal is transmitted to the photoconductive switch along the metal probe and the transmission line, and the photoconductive switch is switched on under the triggering of the detection light, such that the current signal is transmitted to the back end processing unit for processing, so as to obtain the near-field information of the surface of the sample. In this technical solution, the photoconductive switch is loaded on the transmission line connected to the probe, a synchronous laser is used as a trigger of the photoconductive switch, and electro-optic sampling is performed on a picosecond-order pulse current by the movement of a delay line in the delay unit, to obtain an effective near-field signal.

By means of the foregoing setting, the signal extraction method based on an optical path system in the conventional terahertz near-field imaging system is replaced with the method of using the metal probe to convert the near-field signal on the surface of the sample into a current on the probe and then extract same, which eliminates the need for an optical path system for propagating a near-field signal to the far field, significantly reduces the manufacturing cost, and simplifies the construction of the scanning near-field optical microscope. More importantly, the current signal coupled by the metal probe is the near-field signal, which will not be mixed in a far-field signal during the transmission of the near-field signal to the back end processing unit via the transmission line, such that the extraction efficiency and the signal-to-noise ratio of the near-field signal can be greatly improved, and the method for distinguishing between near-field and far-field signals by using a high-order demodulation algorithm in the prior art is avoided, such that the difficulty in subsequent signal processing is reduced.

As a preferred implementation of the incidence unit in the terahertz near-field imaging system, the incidence unit of the terahertz near-field imaging system includes an incidence photoconductive antenna, a parabolic mirror and at least one reflecting mirror, where the incidence photoconductive antenna is configured to receive incident light with an optical path adjusted by the reflecting mirror, and generate an incident signal incident to the parabolic mirror, the parabolic mirror is configured to focus the incident signal on the metal probe, and the local field is generated at the tip of the metal probe by means of the incident signal. In this technical solution, the incident signal is focused on the metal probe in the form of waves in a free space, to excite the local field. The incident light obtained through division by means of the beam splitter is adjusted by a reflecting mirror group composed of at least one reflecting mirror, and is then incident to the incidence photoconductive antenna with an external bias voltage, to generate a terahertz incident wave. The incident wave is focused on the metal probe through the parabolic mirror, and a highly localized electromagnetic field is generated at the tip of the metal probe, to excite the sample below the metal probe to generate the near-field signal.

Yet another objective of the present invention is to provide a terahertz near-field imaging method based on the foregoing terahertz near-field imaging system, in which method the photoconductive antenna is used to generate a picosecond-level incident pulse, which is fed, in the form of a current, to the metal probe from the transmission line connected to the photoconductive antenna, and an electric field is generated at the tip of the probe by means of an incident wave to excite a sample, to implement sample excitation. In addition, the metal probe is used to directly couple near-field information of the surface of the sample, and extract same in the form of a current for signal processing, such that the signal-to-noise ratio and the signal strength of the near-field signal can be significantly improved, and a near-field optical path design is also greatly simplified, and physical effects of structures and materials can be better explored by using a near-field optical microscope, thereby providing a new perspective for understanding various physical phenomena.

According to claim 9, the terahertz near-field imaging method includes the following steps:
dividing a femtosecond laser into incident light and detection light by means of a beam splitter;
converting the incident light into an incident signal, where the incident signal excites a metal probe to generate a local field, the local field excites a sample in a detection direction of the metal probe to generate a near-field signal, and the near-field signal is coupled into a current signal on the metal probe, which is then transmitted to a photoconductive switch via the metal probe and a transmission line;
enabling the detection light to be delayed and then trigger the photoconductive switch to be switched on, and collecting a corresponding current signal after the photoconductive switch is switched on; and
processing the collected current signal to obtain near-field information of a surface of the sample.

Further, the incident signal is conducted to the metal probe in the form of a current via the transmission line, and the metal probe generates the local field under the excitation of the incident signal.

Compared with the prior at, the present invention has the following advantages and beneficial effects.
1. In the present invention, the signal extraction method based on an optical path system in the conventional terahertz near-field imaging system is replaced with the method of using the metal probe to convert the near-field signal on the surface of the sample into a current on the probe and then extract same, and there is provided a non-scattering terahertz scanning near-field current microscope, which eliminates the need for an optical path system for propagating a near-field signal to the far field, significantly reduces the manufacturing cost, and simplifies the construction of the scanning near-field optical microscope. Furthermore, the current signal coupled by the metal probe is the near-field signal, which will not be mixed in a far-field signal during the transmission of the near-field signal to the back end processing unit via the transmission line, such that the extraction efficiency and the signal-to-noise ratio of the near-field signal can be greatly improved. This method in the prior art for distinguishing, based on different modes of decrease in the signal strengths of signals with the distance, between near-field electromagnetic waves and far-field electromagnetic waves by using an externally applied voltage to allow a probe to vibrate up and down to modulate the signals is avoided, such that the difficulty in subsequent signal processing is reduced.
2. In the present invention, a terahertz transmission line is used to connect the incidence photoconductive antenna to the metal probe, such that the generated incident wave is conducted to the metal probe directly in the form of a current, and is then used to form the local field at the tip of the metal probe to excite the sample below the sample, which not only allows the removal of the parabolic mirror for focusing the incident light, but also improves the excitation efficiency of signals, and further improves the excitation efficiency of the near-field signal.
3. The present invention optimizes the length of the metal probe, and the extraction effect of the near-field signal is better when the length of the metal probe is about 0.5 times the wavelength of the incident signal,further preferably when there is a proportional relationship of about half a wavelength between the length of the probe and the wavelength of the incident signal.
4. In the terahertz near-field imaging method provided in the present invention, the metal probe is used for exciting and extracting the near-field signal from the surface of the sample in the form of a current, such that the signal-to-noise ratio and the signal strength of the near-field signal can be significantly improved, and a near-field optical path design is also greatly simplified, and physical effects of structures and materials can be better explored by using a near-field optical microscope, thereby providing a new perspective for understanding various physical phenomena.

### Brief Description of the Drawings

The accompanying drawings described herein are intended to provide a further understanding of embodiments of the present invention, which constitute a part of the present application, and do not constitute limitations on the embodiments of the present invention. In the drawings:
FIG. 1 is a schematic structural diagram of a terahertz near-field imaging system in one or more embodiments of the present invention; and
FIG. 2 is a schematic structural diagram of another terahertz near-field imaging system in one example which does not belong to the claimed invention.

### Detailed Description of theEmbodiments

In order to make the objectives, technical solutions, and advantages of the present invention clearer, the present invention is further described in detail below in conjunction with the embodiments and the accompanying drawings. The illustrative implementations of the present invention and the description thereof are merely intended to explain the present invention, and do not limit the present invention.

In the description of the present invention, it should be understood that an orientation or positional relationship indicated by the term "front", "rear", "left", "right", "top", "bottom", "vertical", "horizontal", "high", "low", "inner", "outer", etc. is based on the orientation or positional relationship shown in the accompanying drawings, which is only for convenience of describing the present invention and simplifying the description, rather than indicating or implying that the referred device or element must have a particular orientation, be constructed and operated in a particular orientation, and therefore should not be construed as limiting the scope of protection of the present invention.

The term "connection" as used in the present invention may be a direct connection or an indirect connection by means of another component, unless otherwise specified.

### Embodiment 1:

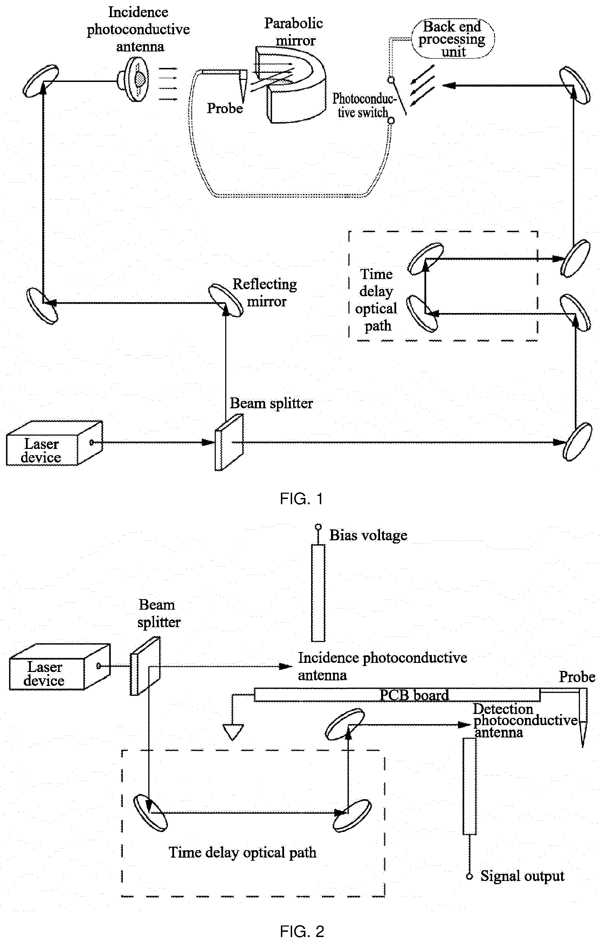

The terahertz near-field imaging system, as shown in FIG. 1, includes a laser device, an incidence unit, a delay unit, a back end processing unit and a metal probe.

The laser device is configured to generate a femtosecond laser, where the femtosecond laser is divided into incident light and detection light by means of a beam splitter, the incident light is transmitted to the incidence unit, and the detection light is transmitted to the delay unit, is delayed, and is then transmitted to a photoconductive switch and triggers the photoconductive switch to be switched on;
the incidence unit includes an incidence photoconductive antenna, a parabolic mirror and at least one reflecting mirror, where the incidence photoconductive antenna is configured to receive incident light with an optical path adjusted by the reflecting mirror, and generate an incident signal incident to the parabolic mirror, the parabolic mirror is configured to focus the incident signal on the metal probe, a local field is generated at the tip of the metal probe by means of the incident signal, and the local field is configured to excite a sample in a detection direction of the metal probe to generate a near-field signal;
the metal probe is configured to couple the near-field signal into a current signal, where the current signal is transmitted to the back end processing unit via the metal probe, a transmission line and the photoconductive switch;
the delay unit includes a time delay optical path formed by a number of reflecting mirrors, to adjust a time for transmission of the detection light to match a time for transmission of the current signal to the photoconductive switch; and
the back end processing unit includes a current amplifier and a computer, where the current amplifier is configured to amplify the current signal and transmit the amplified current signal to the computer, and the computer is configured to process the amplified current signal to obtain near-field information of a surface of the sample.

In this embodiment, the incident signal is focused on the metal probe in the form of an incident wave, to excite the local field. The incident light obtained through division by means of the beam splitter is adjusted by a reflecting mirror group composed of at least one reflecting mirror, and is then incident to the incidence photoconductive antenna with an external bias voltage, and the incident wave generated by the incidence photoconductive antenna is focused on the metal probe through the parabolic mirror, such that the metal probe generates the local field at the tip thereof, and the local field excites the sample below the metal probe to generate the near-field signal. The near-field signal is coupled into the current signal by the metal probe, and the current signal is a current signal on a surface of the metal probe. The current signal is transmitted to the photoconductive switch along the metal probe and the transmission line, and the photoconductive switch is switched on under the triggering of the detection light, such that the current signal is transmitted to the back end processing unit for processing, so as to obtain the near-field information of the surface of the sample. In this embodiment, the photoconductive switch is loaded on the transmission line connected to the probe, a synchronous laser is used as a trigger of the photoconductive switch, and electro-optic sampling is performed on a picosecond-order pulse current by the movement of a delay line in the delay unit, to obtain an effective near-field signal.

In some embodiments, the length of the metal probe is 0.5 times the wavelength of the incident signal. In an embodiment, there is a proportional relationship of about half a wavelength between the length of the probe and the wavelength of the incident signal.

In some embodiments, the laser device is that of a terahertz time-domain spectrometer. The terahertz time-domain spectrometer generates an ultrafast pulse wave having a wavelength in the order of 10⁻¹², and covers a frequency band ranging from 0.1 to 10 terahertz.

Example which does not belong to the invention:
The terahertz near-field imaging system, as shown in FIG. 2, includes a laser device, an incidence unit, a delay unit, a back end processing unit and a metal probe.

The laser device is configured to generate a femtosecond laser, where the femtosecond laser is divided into incident light and detection light by means of a beam splitter, the incident light is transmitted to the incidence unit, and the detection light is transmitted to the delay unit, is delayed, and is then transmitted to a photoconductive switch and triggers the photoconductive switch to be switched on;

the incidence unit includes an incidence photoconductive antenna connected to the metal probe via a transmission line, where the incidence photoconductive antenna is configured to generate an incident signal under the excitation of the incident light, and the incident signal is conducted to the metal probe in the form of a current via the transmission line, a local field is generated at the tip of the metal probe, and the local field is configured to excite a sample in a detection direction of the metal probe to generate a near-field signal;

the metal probe is configured to couple the generated near-field signal into a current signal, where the current signal is transmitted to a back end processing unit via the metal probe, the transmission line and the photoconductive switch, and the photoconductive switch is triggered to be switched on by the detection light delayed by the delay unit;

the delay unit includes a time delay optical path formed by a number of reflecting mirrors, to adjust a time for transmission of the detection light to match a time for transmission of the current signal to the photoconductive switch; and

the back end processing unit includes a current amplifier and a computer, where the current amplifier is configured to amplify the current signal and transmit the amplified current signal to the computer, and the computer is configured to process the amplified current signal to obtain near-field information of a surface of the sample.

In this embodiment, the incident signal is fed into the metal probe in the form of the current via the transmission line, and an electric field is generated at the tip of the probe to excite the sample. The incident light obtained through division by means of the beam splitter may have the optical path adjusted by the reflecting mirror group and is then incident to the incidence photoconductive antenna, or may be directly incident to the incidence photoconductive antenna. The incidence photoconductive antenna has an external bias voltage and an optical fiber. Through the control by the bias voltage and the laser, the incidence photoconductive antenna can generate a picosecond-order pulse current signal, which is conducted to the tip of the probe to excite the near-field signal on the surface of the sample. By means of the foregoing setting, the near-field signal is excited also in the form of a current instead, which further simplifies the design and construction of a near-field optical path system, reduces the difficulty in the excitation and collection of the near-field signal, and greatly improves the signal-to-noise ratio and the signal strength of the near-field signal.

In an embodiment, the photoconductive switch uses a detection photoconductive antenna to implement electro-optic sampling of the pulse current signal. The detection photoconductive antenna is externally connected to an optical fiber and a coaxial cable, to output the current signal to a signal processing module such as a back end amplifier.

In one or more embodiments, the system further includes a printed circuit board, the printed circuit board being provided with the incidence photoconductive antenna and a microstrip line connected to each other, and further having a ceramic support plane provided thereon, where the ceramic support plane is used for securing a metal cantilever and the metal probe connected to the metal cantilever, and the metal cantilever is connected to the microstrip line via a jumper wire.

### Embodiment 2:

The terahertz near-field imaging method based on the imaging system in the foregoing embodiments includes the following steps:
dividing a femtosecond laser into incident light and detection light by means of a beam splitter;
converting the incident light into an incident signal, where the incident signal excites a metal probe to generate a local field, the local field excites a sample in a detection direction of the metal probe to generate a near-field signal, and the near-field signal is coupled into a current signal on the metal probe, which is then transmitted to a photoconductive switch via the metal probe and a transmission line;
enabling the detection light to be delayed and then trigger the photoconductive switch to be switched on, and collecting a corresponding current signal after the photoconductive switch is switched on; and
processing the collected current signal to obtain near-field information of a surface of the sample.

In some embodiments, the incident signal is conducted to the metal probe in the form of a current via the transmission line, and the metal probe generates the local field under the excitation of the incident signal. The metal probe is used for exciting and extracting the near-field signal from the surface of the sample in the form of a current, such that the signal-to-noise ratio and the signal strength of the near-field signal can be significantly improved, and a near-field optical path design is also greatly simplified, and physical effects of structures and materials can be better explored by using a near-field optical microscope, thereby providing a new perspective for understanding various physical phenomena.

The objectives, technical solutions, and beneficial effects of the present invention are further described in detail by the specific implementations described above. It should be understood that those described above are merely specific implementations of the present invention, and are not intended to limit the scope of protection of the present invention. The invention is defined by the appended claims.

## Claims

1. A terahertz near-field imaging system, **characterized by** comprising:
a laser device for generating a femtosecond laser, wherein the femtosecond laser is divided into incident light and detection light by means of a beam splitter, the incident light is transmitted to an incidence unit, and the detection light is transmitted to a delay unit, is delayed, and is then transmitted to a photoconductive switch and triggers the photoconductive switch to be switched on;
the incidence unit for generating an incident signal under the excitation of the incident light, wherein the incident signal is configured to excite a metal probe to generate a local field, and the local field is configured to excite a sample in a detection direction of the metal probe to generate a near-field signal;
the metal probe for coupling the near-field signal into a current signal on a surface of the metal probe, wherein the current signal is transmitted to a back end processing unit via the metal probe, a transmission line and the photoconductive switch; and
the back end processing unit for receiving and processing the current signal to obtain near-field information of a surface of the sample.

2. The terahertz near-field imaging system according to claim 1, **characterized in that** the incidence unit comprises an incidence photoconductive antenna, a parabolic mirror and at least one reflecting mirror, wherein the incidence photoconductive antenna is configured to receive incident light with an optical path adjusted by the reflecting mirror, and generate an incident signal incident to the parabolic mirror, the parabolic mirror is configured to focus the incident signal on the metal probe, and the local field is generated at the tip of the metal probe by means of the incident signal.

3. The terahertz near-field imaging system according to claim 1, **characterized in that** the incidence unit comprises an incidence photoconductive antenna connected to the metal probe via the transmission line, wherein the incidence photoconductive antenna is configured to generate the incident signal under the excitation of the incident light, the incident signal is conducted to the metal probe in the form of a current via the transmission line, and the local field is generated at the tip of the metal probe.

4. The terahertz near-field imaging system according to claim 3, **characterized in that** the system further comprises a printed circuit board, the printed circuit board being provided with the incidence photoconductive antenna and a microstrip line connected to each other, and further having a ceramic support plane provided thereon, wherein the ceramic support plane is used for securing a metal cantilever and the metal probe connected to the metal cantilever, and the metal cantilever is connected to the microstrip line via a jumper wire.

5. The terahertz near-field imaging system according to any one of claims 2 to 4, **characterized in that** the length of the metal probe is of the same order as the wavelength of the incident signal.

6. The terahertz near-field imaging system according to claim 5, **characterized in that** the back end processing unit comprises a current amplifier and a computer, wherein the current amplifier is configured to amplify the current signal and transmit the amplified current signal to the computer, and the computer is configured to process the amplified current signal to obtain the near-field information of the surface of the sample.

7. The terahertz near-field imaging system according to claim 5, **characterized in that** the photoconductive switch is a detection photoconductive antenna.

8. The terahertz near-field imaging system according to claim 5, **characterized in that** the delay unit comprises a time delay optical path formed by a number of reflecting mirrors, to adjust a time for transmission of the detection light to match a time for transmission of the current signal to the photoconductive switch.

9. A terahertz near-field imaging method, **characterized by** comprising the following steps:
dividing a femtosecond laser into incident light and detection light by means of a beam splitter;
converting the incident light into an incident signal, wherein the incident signal excites a metal probe to generate a local field, the local field excites a sample in a detection direction of the metal probe to generate a near-field signal, and the near-field signal is coupled on the metal probe into a current signal on a surface of the metal probe, which is then transmitted to a photoconductive switch via the metal probe and a transmission line;
enabling the detection light to be delayed and then trigger the photoconductive switch to be switched on, and collecting a corresponding current signal after the photoconductive switch is switched on; and
processing the collected current signal to obtain near-field information of a surface of the sample.

10. The terahertz near-field imaging method according to claim 9, **characterized in that** the incident signal is conducted to the metal probe in the form of a current via the transmission line, and the metal probe generates the local field under the excitation of the incident signal.

## Patentansprüche

1. Terahertz-Nahfeldbildgebungssystem, **dadurch gekennzeichnet, dass** es Folgendes umfasst:
eine Laservorrichtung zum Erzeugen eines Femtosekundenlasers, wobei der Femtosekundenlaser mittels eines Strahlteilers in Einfalllicht und Erfassungslicht aufgeteilt wird, das Einfalllicht an eine Einfalleinheit übertragen wird und das Erfassungslicht an eine Verzögerungseinheit übertragen wird, verzögert wird und dann an einen Lichtleiterschalter übertragen wird und den Lichtleiterschalter zum Einschalten auslöst;
die Einfalleinheit zum Erzeugen eines Einfallsignals unter der Anregung des Einfalllichts, wobei das Einfallsignal dazu eingerichtet ist, eine Metallsonde zu erregen, um ein lokales Feld zu erzeugen, und das lokale Feld dazu eingerichtet ist, eine Probe in einer Erfassungsrichtung der Metallsonde zu erregen, um ein Nahfeldsignal zu erzeugen;
die Metallsonde zum Koppeln des Nahfeldsignals in ein Stromsignal auf einer Oberfläche der Metallsonde, wobei das Stromsignal über die Metallsonde, eine Übertragungsleitung und den Lichtleiterschalter an eine Backend-Verarbeitungseinheit übertragen wird; und
die Backend-Verarbeitungseinheit zum Empfangen und Verarbeiten des Stromsignals, um Nahfeldinformationen einer Oberfläche der Probe zu erhalten.

2. Terahertz-Nahfeldbildgebungssystem nach Anspruch 1, **dadurch gekennzeichnet, dass** die Einfalleinheit eine Einfalllichtleiterantenne, einen Parabolspiegel und mindestens einen reflektierenden Spiegel umfasst, wobei die Einfalllichtleiterantenne so eingerichtet ist, dass sie Einfalllicht mit einem von dem reflektierenden Spiegel angepassten optischen Pfad empfängt und einen Einfallsignalvorfall an den Parabolspiegel erzeugt, wobei der Parabolspiegel so eingerichtet ist, dass er das Einfallsignal auf die Metallsonde fokussiert, und das lokale Feld wird an der Spitze der Metallsonde mithilfe des Störsignals erzeugt.

3. Terahertz-Nahfeldbildgebungssystem nach Anspruch 1, **dadurch gekennzeichnet, dass** die Einfalleinheit eine über die Übertragungsleitung mit der Metallsonde verbundene Einfalllichtleiterantenne umfasst, wobei die Einfalllichtleiterantenne so eingerichtet ist, dass sie das Einfallsignal unter der Anregung des Einfalllichts erzeugt, das Einfallsignal in Form eines Stroms über die Übertragungsleitung zu der Metallsonde geleitet wird und das lokale Feld an der Spitze der Metallsonde erzeugt wird.

4. Terahertz-Nahfeldbildgebungssystem nach Anspruch 3, **dadurch gekennzeichnet, dass** das System ferner eine Leiterplatte umfasst, wobei die Leiterplatte mit der Einfalllichtleiterantenne und einer miteinander verbundenen Mikrostreifenlinie versehen ist und ferner eine darauf vorgesehene keramische Stützebene aufweist, wobei die keramische Stützebene zur Befestigung eines Metallauslegers und der mit dem Metall-Cantilever verbundenen Metallsonde verwendet wird, und der Metallausleger über eine Brückenleitung mit der Mikrostreifenlinie verbunden wird.

5. Terahertz-Nahfeldbildgebungssystem nach einem der Ansprüche 2 bis 4, **dadurch gekennzeichnet, dass** die Länge der Metallsonde derselben Ordnung wie die Wellenlänge des Einfallsignals ist.

6. Terahertz-Nahfeldbildgebungssystem nach Anspruch 5, **dadurch gekennzeichnet, dass** die Backend-Verarbeitungseinheit einen Stromverstärker und einen Computer umfasst, wobei der Stromverstärker so eingerichtet ist, dass er das Stromsignal verstärkt und das verstärkte Stromsignal an den Computer überträgt, und der Computer so eingerichtet ist, dass er das verstärkte Stromsignal verarbeitet, um die Nahfeldinformationen der Oberfläche der Probe zu erhalten.

7. Terahertz-Nahfeldbildgebungssystem nach Anspruch 5, **dadurch gekennzeichnet, dass** der lichtleitende Schalter eine Erfassungslichtleitantenne ist.

8. Terahertz-Nahfeldbildgebungssystem nach Anspruch 5, **dadurch gekennzeichnet, dass** die Verzögerungseinheit einen zeitverzögerten optischen Pfad umfasst, der durch eine Anzahl von reflektierenden Spiegeln gebildet wird, um eine Zeit für die Übertragung des Erfassungslichts so einzustellen, dass sie einer Zeit für die Übertragung des Stromsignals an den lichtleitenden Schalter entspricht.

9. Terahertz-Nahfeldbildgebungsverfahren, das durch folgende Schritte gekennzeichnet ist:
Teilen eines Femtosekundenlasers in Einfalllicht und Erfassungslicht mittels eines Strahlteilers;
Umwandeln des Einfalllichts in ein Einfallsignal, wobei das Einfallsignal eine Metallsonde anregt, um ein lokales Feld zu erzeugen, das lokale Feld eine Probe in einer Erfassungsrichtung der Metallsonde anregt, um ein Nahfeldsignal zu erzeugen, und das Nahfeldsignal an der Metallsonde in ein Stromsignal auf einer Oberfläche der Metallsonde gekoppelt wird, das dann über die Metallsonde und eine Übertragungsleitung an einen Lichtleiterschalter übertragen wird;
Ermöglichen des Verzögerns des Erfassungslichts und anschließendes Auslösen des Lichtleiterschalters zum Einschalten und Erheben eines entsprechenden Stromsignals nach dem Einschalten des Lichtleiterschalters; und
Verarbeiten des erfassten Stromsignals, um Nahfeldinformationen einer Oberfläche der Probe zu erhalten.

10. Terahertz-Nahfeldbildgebungsverfahren nach Anspruch 9, **dadurch gekennzeichnet, dass** das Störsignal in Form eines Stroms über die Übertragungsleitung zu der Metallsonde geleitet wird und die Metallsonde unter Anregung des Störsignals das lokale Feld erzeugt.

## Revendications

1. Système d'imagerie en champ proche térahertz, **caractérisé en ce qu'**il comporte :
un dispositif laser pour générer un laser femtoseconde, dans lequel le laser femtoseconde est divisé en une lumière incidente et une lumière de détection au moyen d'un séparateur de faisceau, la lumière incidente est transmise à une unité d'incidence, et la lumière de détection est transmise à une unité de temporisation, est retardée, et est ensuite transmise à un commutateur photoconducteur et déclenche l'activation du commutateur photoconducteur ;
l'unité d'incidence pour générer un signal d'incidence sous l'excitation de la lumière incidente, dans lequel le signal d'incidence est configuré pour exciter une sonde métallique pour générer un champ local, et le champ local est configuré pour exciter un échantillon dans une direction de détection de la sonde métallique pour générer un signal de champ proche ;
la sonde métallique pour coupler le signal de champ proche à un signal de courant sur une surface de la sonde métallique, dans lequel le signal de courant est transmis à une unité de traitement en aval par l'intermédiaire de la sonde métallique, d'une ligne de transmission et du commutateur photoconducteur ; et
l'unité de traitement en aval pour recevoir et traiter le signal de courant pour obtenir des informations de champ proche d'une surface de l'échantillon.

2. Système d'imagerie en champ proche térahertz selon la revendication 1, **caractérisé en ce que** l'unité d'incidence comporte une antenne photoconductrice d'incidence, un miroir parabolique et au moins un miroir réfléchissant, dans lequel l'antenne photoconductrice d'incidence est configurée pour recevoir une lumière incidente ayant un trajet optique ajusté par le miroir réfléchissant, et générer un signal d'incidence incident sur le miroir parabolique, le miroir parabolique est configuré pour focaliser le signal d'incidence sur la sonde métallique, et le champ local est généré au niveau de l'extrémité de la sonde métallique au moyen du signal d'incidence.

3. Système d'imagerie en champ proche térahertz selon la revendication 1, **caractérisé en ce que** l'unité d'incidence comporte une antenne photoconductrice d'incidence connectée à la sonde métallique par l'intermédiaire de la ligne de transmission, dans lequel l'antenne photoconductrice d'incidence est configurée pour générer le signal d'incidence sous l'excitation de la lumière incidente, le signal d'incidence est conduit à la sonde métallique sous la forme d'un courant par l'intermédiaire de la ligne de transmission, et le champ local est généré au niveau de l'extrémité de la sonde métallique.

4. Système d'imagerie en champ proche térahertz selon la revendication 3, **caractérisé en ce que** le système comporte en outre une carte de circuit imprimé, la carte de circuit imprimé étant pourvue de l'antenne photoconductrice d'incidence et d'une ligne microruban connectées l'une à l'autre, et présentant en outre un plan de support en céramique fourni sur celle-ci, dans lequel le plan de support en céramique est utilisé pour fixer un porte-à-faux métallique et la sonde métallique reliée au porte-à-faux métallique, et le porte-à-faux métallique est relié à la ligne microruban par l'intermédiaire d'un fil de liaison.

5. Système d'imagerie en champ proche térahertz selon l'une quelconque des revendications 2 à 4, **caractérisé en ce que** la longueur de la sonde métallique est du même ordre que la longueur d'onde du signal d'incidence.

6. Système d'imagerie en champ proche térahertz selon la revendication 5, **caractérisé en ce que** l'unité de traitement en aval comporte un amplificateur de courant et un ordinateur, dans lequel l'amplificateur de courant est configuré pour amplifier le signal de courant et transmettre le signal de courant amplifié à l'ordinateur, et l'ordinateur est configuré pour traiter le signal de courant amplifié pour obtenir les informations de champ proche de la surface de l'échantillon.

7. Système d'imagerie en champ proche térahertz selon la revendication 5, **caractérisé en ce que** le commutateur photoconducteur est une antenne photoconductrice de détection.

8. Système d'imagerie en champ proche térahertz selon la revendication 5, **caractérisé en ce que** l'unité de temporisation comporte un trajet optique de temporisation formé par un certain nombre de miroirs réfléchissants, pour ajuster un temps de transmission de la lumière de détection pour correspondre à un temps de transmission du signal de courant au commutateur photoconducteur.

9. Procédé d'imagerie en champ proche térahertz, **caractérisé en ce qu'**il comporte les étapes suivantes :
la séparation d'un laser femtoseconde en une lumière incidente et une lumière de détection au moyen d'un séparateur de faisceau ;
la conversion de la lumière incidente en un signal d'incidence, dans lequel le signal d'incidence excite une sonde métallique pour générer un champ local, le champ local excite un échantillon dans une direction de détection de la sonde métallique pour générer un signal de champ proche, et le signal de champ proche est couplé sur la sonde métallique en un signal de courant sur une surface de la sonde métallique, qui est ensuite transmis à un commutateur photoconducteur par l'intermédiaire de la sonde métallique et d'une ligne de transmission ;
le fait de permettre à la lumière de détection d'être retardée et ensuite le déclenchement de l'activation du commutateur photoconducteur, et la collecte d'un signal de courant correspondant après l'activation du commutateur photoconducteur ; et
le traitement du signal de courant collecté pour obtenir des informations de champ proche d'une surface de l'échantillon.

10. Procédé d'imagerie en champ proche térahertz selon la revendication 9, **caractérisé en ce que** le signal d'incidence est conduit à la sonde métallique sous la forme d'un courant par l'intermédiaire de la ligne de transmission, et la sonde métallique génère le champ local sous l'excitation du signal d'incidence.
